# EUROPÄISCHE PATENTANMELDUNG

(11) **EP 3 042 556 A1**
(43) Veröffentlichungstag der Anmeldung: **13.07.2016**
(21) Anmeldenummer: 16401000.1
(22) Anmeldetag: 04.01.2016
(51) Int. Cl.: A01C 7/08

(54) **PNEUMATISCHE SÄMASCHINE**

(30) Priorität: 07.01.2015 DE 102015100087
(71) Anmelder: Amazonen-Werke H. Dreyer GmbH & Co. KG, 49205 Hasbergen (DE)
(72) Erfinder: Bruns, Helmut, 27804 Berne (DE); Flucke, Jan, 27798 Hude (DE)

(57) **Zusammenfassung**

Pneumatische Sämaschine zum Verteilen von Saatgut oder Düngemittel, mit
- einem Vorratsbehälter (1) für das Verteilgut,
- einem damit in Verbindung stehenden Dosierorgan (2),
- einem Verteiler (6) der über eine pneumatische Förderleitung (5, 8) mit dem Dosierorgan (2) verbunden ist,
- von dem Verteiler (6) führenden Leitungen (11) zu einzelnen Ausbringorganen,
- wobei die pneumatische Förderleitung (5) ab zumindest einem Umlenkbogen (13, 15) zumindest einen Richtungswechsel beschreibt und im Wesentlichen senkrecht aufsteigend an den Verteiler (6) herangeführt ist,
- wobei die Förderleitung (5) von ihrem letzten liegend verlaufenden Bereich (8) über einen geradlinig schräg ansteigend verlaufenden Bereich (14) an den Umlenkbogen (15) herangeführt ist,
- wobei der senkrecht aufsteigende Bereich (9) der Förderleitung (5) zwischen dem Umlenkbogen (15) und dem Verteiler (6) zumindest teilweise als wellenförmiges Zerstreuungsrohr (10) ausgebildet ist,
- wobei der schräg ansteigende Bereich (14) der Förderleitung (5) mit einem Winkel zwischen 20° und 70° zur Horizontalen angeordnet ist.

Um mit einfachen Mitteln eine verbesserte gleichmäßige Zuführung des auszubringenden Gutes zu dem Verteiler zu erreichen, ist vorgesehen, dass das der schräg ansteigende Bereich (14) der Förderleitung (5) zumindest über einen Teilbereich als wellenförmiges Zerstreuungsrohr (17) ausgebildet ist.

## Beschreibung

Die Erfindung betrifft eine pneumatische Sämaschine gemäß des Oberbegriffes des Patentanspruches 1.

Eine derartige pneumatische Sämaschine ist in der EP 1 752 030 A1 beschrieben. Bei dieser Sämaschine wird dem Steigrohr über ein horizontal angeordnetes Zuförderrohr mit einem 90°-Krümmer das auszubringende Material zugeführt. In dem horizontal verlaufenden Bereich vor dem Krümmer ist in dem Zuführungsrohr ein wellenartiges Zerstreuungsrohr angeordnet. Versuche haben gezeigt, dass eine derartige Ausgestaltung keine ausreichend gleichmäßige Zuführung des auszubringenden Gutes zu dem Verteiler in allen Einsatzfällen gewährleistet.

Der Erfindung liegt die Aufgabe zu Grunde, mit einfachen Mitteln eine verbesserte gleichmäßige Zuführung des auszubringenden Gutes zu dem Verteiler zu erreichen.

Diese Aufgabe der erfindungsgemäß dadurch erreicht, dass der schräg ansteigende Bereich der Förderleitung zumindest über einen Teilbereich als wellenförmiges Zerstreuungsrohr ausgebildet ist.

Infolge dieser Maßnahme wird durch die Anordnung eines wellenförmigen Zerstreuungsrohr in einem ansteigenden Bereich der Förderleitung in überraschenderweise eine wesentliche Verbesserung der Gleichmäßigkeit Führung des Gutes zu dem Verteiler erreicht.

Hierbei haben Versuche gezeigt, dass sich eine besonders gute Vergleichmäßigung in einfacher Weise dadurch erreichen lässt, dass der schräg ansteigende Bereich der Förderleitung mit einem Winkel von zumindest etwa 30° zur Horizontalen angeordnet ist.

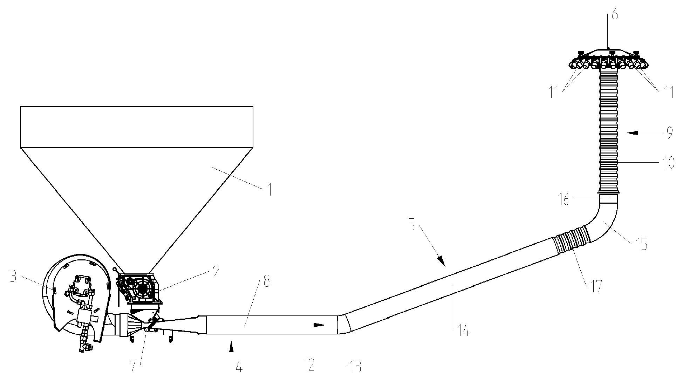

Weitere Einzelheiten der Erfindung sind der Beispielsbeschreibung und der Zeichnung zu entnehmen. Die Zeichnung zeigt
die Anordnung des Vorratsbehälters der Dosiereinrichtung und Förderleitung mit Verteilerkopf einer Verteilmaschine in Seitenansicht und Prinzipdarstellung.

Der Einfachheit halber sind in der Zeichnung lediglich der Vorratsbehälter 1, die Dosiereinrichtung 2, die von dem angetriebenen Gebläse 3 pneumatisch beaufschlagte Förderleitung 4 mit Umlenkbereich 5 und einem als Verteilerkopf 6 ausgebildeten Verteiler dargestellt. In dem Vorratsbehälter 1 befindet sich das auszubringende Material, hier beispielsweise Saatgut. Dieses sich im Vorratsbehälter 1 befindliche Saatgut wird über das Dosierorgan 2 in einstellbaren Mengen über eine Schleuse 7 in den Förderluftstrom der Förderleitung 4 eingespeist. Über den horizontal verlaufenden Bereich 8 der Förderleitung wird das Saatgut von dem Luftstrom, der von dem angetriebenen Gebläse 3 erzeugt wird dem zwischen dem horizontalen Bereich 8 der Förderleitung 4 und dem senkrecht aufsteigenden Bereich 9 des Zerstreuungsrohres 10 über den in der Förderleitung 4 angeordneten Umlenkbereich 5 zugeführt. Der senkrecht aufsteigende Bereich 9 der Förderleitung 4 weist einen Bereich auf, der als wellenförmiges Zerstreuungsrohr 10 ausgebildet ist. Am Ende der senkrecht aufsteigenden Förderleitung 4 ist der als Verteilerkopf 6 ausgebildete Verteilerkopf 6 angeordnet, von dem aus Abgangsleitungen 11, an denen zu einzelnen Ausbringorganen, die beispielsweise als Säschare ausbildet sind, führende Leitungen angeschlossen sind. Von dem Verteilerkopf 6 wird das über dem Zerstreuungsrohr 10 dem Verteiler 6 zugeführten Saatgut in gleichmäßiger Weise auf die einzelnen Abgangsleitungen 11 aufgeteilt.

Der Umlenkbereich 5 weist zwei Krümmungsbereiche auf. In Förderrichtung 12 gesehen schließt sich an den horizontalen Bereich 8 der Förderleitung 5 ein erster Umlenkbogen 13 mit einem Krümmungsbereich zwischen 20° und 60°, vorzugsweise 30°, wie hier im Ausführungsbeispiel an. An den ersten Umlenkbogen 13 schließt sich ein geradlinig schräg aufsteigend verlaufender Bereich 14 der Förderleitung 8 an. An den geradlinig schräg aufsteigend verlaufenden Bereich 14 der Förderleitung 4 schließt sich ein zweiter Umlenkbogen 15 mit einem Krümmungsbereich zwischen 20° und 60°, vorzugsweise 70°, wie die Zeichnung zeigt, an. Der zweite Krümmungsbogen 15 ist in Richtung des senkrecht verlaufenden Zerstreuungsrohres 10 geführt ist.

Die Krümmungsbogen 13 und 15 weisen über ihren gesamten Verlauf jeweils zumindest annähernd den gleichen Krümmungsradius auf.

Weiterhin weisen die Krümmungsbogen 13 und 15 über ihren gesamten Verlauf jeweils zumindest annähernd den gleichen Durchmesser auf.

Zwischen dem ersten Krümmungsbogen 13 unter dem zweiten Krümmungsbogen 15 und ist in dem schräg ansteigenden Rohr 14 der wellenförmige Bereich des Zerstreuungsrohr 17 angeordnet. Durch den wellenförmigen Bereich des Zerstreuungsrohres 17 wird eine Vorvergleichmäßigung des auszubringenden Gutes in der Förderleitung erreicht, so dass dann durch den wellenförmigen Bereich des Streichrohres 10 das auszubringenden gut in verbesserter Vergleichmäßigung dem Verteilerkopf 6 zugeleitet wird.

## Patentansprüche

1. Pneumatische Sämaschine zum Verteilen von Saatgut oder Düngemittel, mit
- einem Vorratsbehälter (1) für das Verteilgut,
- einem damit in Verbindung stehenden Dosierorgan (2),
- einem Verteiler (6) der über eine pneumatische Förderleitung (5,8) mit dem Dosierorgan (2) verbunden ist,
- von dem Verteiler (6) führenden Leitungen (11) zu einzelnen Ausbringorganen,
- wobei die pneumatische Förderleitung (5) ab zumindest einem Umlenkbogen (13,15) zumindest einen Richtungswechsel beschreibt und im Wesentlichen senkrecht aufsteigend an den Verteiler (6) herangeführt ist,
- wobei die Förderleitung (5) von ihrem letzten liegend verlaufenden Bereich (8) über einen geradlinig schräg ansteigend verlaufenden Bereich (14) an den Umlenkbogen (15) herangeführt ist,
- wobei der senkrecht aufsteigende Bereich (9) der Förderleitung (5) zwischen dem Umlenkbogen (15) und dem Verteiler (6) zumindest teilweise als wellenförmiges Zerstreuungsrohr (10) ausgebildet ist,
- wobei der schräg ansteigende Bereich (14) der Förderleitung (5) mit einem Winkel zwischen 20° und 70° zur Horizontalen angeordnet ist,
**dadurch gekennzeichnet,**
**dass** das der schräg ansteigende Bereich (14) der Förderleitung (5) zumindest über einen Teilbereich als wellenförmiges Zerstreuungsrohr (17) ausgebildet ist.

2. Sämaschine nach Anspruch 1, **dadurch gekennzeichnet, dass** der schräg ansteigende Bereich (14) der Förderleitung (5) mit einem Winkel von zumindest etwa 30° zur Horizontalen angeordnet ist.
